# EUROPÄISCHE PATENTSCHRIFT

(11) **EP 2 839 189 B1**
(45) Veröffentlichungstag und Bekanntmachung des Hinweises auf die Patenterteilung: **07.12.2016**
(21) Anmeldenummer: 13715606.3
(22) Anmeldetag: 03.04.2013
(51) Int. Cl.: F16H 57/029, F16H 57/031

(54) **GETRIEBE MIT EINER ERSTEN WELLE, INSBESONDERE ABTREIBENDEN WELLE, UND EINER ZWEITEN WELLE, INSBESONDERE ZWISCHENWELLE**
GEARBOX HAVING A FIRST SHAFT, IN PARTICULAR AN OUTPUT SHAFT, AND A SECOND SHAFT, IN PARTICULAR AN INTERMEDIATE SHAFT
TRANSMISSION POURVUE D'UN PREMIER ARBRE, EN PARTICULIER UN ARBRE DE SORTIE, ET D'UN DEUXIÈME ARBRE, EN PARTICULIER UN ARBRE INTERMÉDIAIRE

(30) Priorität: 18.04.2012 DE 102012007626
(43) Veröffentlichungstag der Anmeldung: 25.02.2015
(73) Patentinhaber: Sew-Eurodrive GmbH & Co. KG, 76646 Bruchsal (DE)
(72) Erfinder: SIGMUND, Andreas, 76646 Bruchsal (DE)
(86) Internationale Anmeldenummer: PCT/EP2013/000982
(87) Internationale Veröffentlichungsnummer: WO 2013/156111

(56) Entgegenhaltungen:
- WO-A1-2010/081523
- DE-A1-102005 031 197
- US-A1- 2006 156 861

## Beschreibung

Die Erfindung betrifft ein Getriebe mit einer ersten Welle, insbesondere abtreibenden Welle, und einer zweiten Welle, insbesondere Zwischenwelle.

Es ist allgemein bekannt, dass ein Getriebe eine eintreibende Welle aufweist, auf der eine mit ihr drehfest verbundene Verzahnung vorgesehen ist, die mit einer mit einer Zwischenwelle drehfest verbundenen Verzahnung im Eingriff steht, wobei die Zwischenwelle eine mit ihr ebenfalls drehfest verbundene weitere Verzahnung aufweist, welche mit einer mit einer Abtriebswelle des Getriebes drehfest verbundenen Abtriebswelle im Eingriff steht.

Aus der gattungsgemässen WO 2010/081523 A1 ist ein Getriebe mit Getriebegehäuse bekannt, wobei eine Zwischenscheibe (dortiges Bezugszeichen 24) eine Ausnehmung (dortiges Bezugszeichen 34) verdeckt.

Aus der DE 10 2005 031197 A1 ist ein Antrieb mit Lüfter bekannt.

Aus der US 2006/156861 A1 ist ein Getriebegehäuse bekannt.

Der Erfindung liegt daher die Aufgabe zugrunde, ein Getriebe weiterzubilden, wobei die Reinigung einfach und effektiv ausführbar sein soll.

Erfindungsgemäß wird die Aufgabe bei dem Getriebe nach den in Anspruch 1 angegebenen Merkmalen gelöst.

Von Vorteil ist dabei, dass die Abdeckhaube an ihrer Außenseite abgerundet ausführbar ist, so dass Wasser und/oder flüssiges Reinigungsmittel schnell abfließt. Insbesondere sind auf diese Weise Teile oder Komponenten abdeckbar, die eine zerklüftete Oberflächenstruktur aufweisen, wie beispielswiese die Schrumpfscheibe mit der an ihr vorgesehenen Schrauben und/oder Muttern, der Wellendichtring oder eine Verschlusskappe, die eine im Wesentlichen ebene Oberfläche aufweist und beim Übergangsbereich zum Gehäuseteil ein umlaufender Spalt oder eine umlaufende Vertiefung aufweist. Die Abdeckhaube wird also dicht mit dem Gehäuseteil verbunden und erlaubt in ihrem Innenbereich zerklüftete Komponenten, die abhängig von der Montagerichtung des Getriebes eine Ansammlung von Wasser oder Flüssigkeit bewirken können. Eine solche Ansammlung von Flüssigkeit, beispielsweise zuckerhaltige Lösungen, wird insbesondere durch Vertiefungen, wie Spaltbereiche oder Nuten, bewirkt oder auch durch im Wesentlichen ebene oder konkave Oberflächenbereiche.

Die Abdeckhaube ist derart ausführbar, dass sie derart gewölbt ist, beispielsweise kugelabschnittsförmig oder abschnittsweise ovalförmig, so dass Flüssigkeit bei jeder Montagerichtung des Getriebes abfließt und/oder abtropft und somit Ansammlungen verhindert sind.

Zur dichten Verbindung ist ein Dichtungsteil vorgesehen, das eben ausgeformt ist und eine ovale Außenkontur aufweist. Dabei ist eine Ausnehmung vorsehbar, so dass die zerklüfteten Oberflächenabschnitte der Teile durch die Ausnehmung hindurchragen und in den von der Abdeckhaube gebildeten Innenraum hineinragen. Das Dichtungsteil hat also die wesentliche Funktion des Herstellens der Dichtheit zwischen der Abdeckhaube und dem Gehäuseteil. Zusätzlich ist auch ein direktes Abdecken der Verschlusskappe erlaubt, da diese im Wesentlichen eben anschließt an die umgebenden Oberflächenabschnitte des Gehäuseteils.

Zum Anpressen des Dichtungsteils an das Gehäuseteil ist ein der Abdeckhaube ein Kragenabschnitt angeordnet, so dass die Druckbelastung reduzierbar ist, indem der Kragenabschnitt eine entsprechend große Fläche aufweist. Der Kragenabschnitt verläuft im Wesentlichen parallel zu demjenigen Oberflächenabschnitt des Gehäuseteils, in welchem der Kragenabschnitt das Dichtungsteil an den Oberflächenabschnitt des Gehäuseteils andrückt.

Die Abdeckhaube ist vorzugsweise als Kunststoffspritzgussteil fertigbar.

Bei einer vorteilhaften Ausgestaltung ist die erste Welle eine Hohlwelle und die zweite Welle ist eine Vollwelle. Von Vorteil ist dabei, dass eine Vollwelle einer anzutreibenden Vorrichtung in die Hohlwelle einsteckbar ist und mit dieser kraftschlüssig verbindbar ist, insbesondere mittels der Schrumpfscheibe, welche einen Wellenabschnitt der Hohlwelle auf diese Vollwelle aufschrumpft. Die Ausbildung der zweiten Welle als Vollwelle ermöglicht die Übertragung hoher Drehmomente.

Bei einer vorteilhaften Ausgestaltung deckt die Verschlusskappe ein Lager der zweiten Welle und/oder einen an der zweiten Welle angeordneten Wellendichtring ab. Von Vorteil ist dabei, dass somit eine öldichte Abdichtung schon durch die Verschlusskappe bewirkt ist und daher die Abdeckhaube nur eine gegen Wasser oder Reinigungsmittel dichte Abdeckung bereit stellen muss.

Bei einer vorteilhaften Ausgestaltung bildet die Verschlusskappe mit einem die zweite Ausnehmung umgebenden Randbereich der Außenoberfläche des Gehäuseteils einen im Wesentlichen ebenen Flächenabschnitt. Von Vorteil ist dabei, dass eine direkte Abdeckung durch das Dichtungsteil ermöglicht ist.

Von Vorteil ist dabei, dass der Haubenabschnitt abgerundet ausführbar ist zum Abführen von Flüssigkeit und der Kragenabschnitt den Anpressdruck auf ein zulässiges Maß reduziert.

Bei einer vorteilhaften Ausgestaltung ist der Haubenabschnitt rotationssymmetrisch ausgeführt. Von Vorteil ist dabei, dass eine einfache Herstellung ermöglicht ist.

Bei einer vorteilhaften Ausgestaltung ist ein Drehmomentstützteil am Gehäuseteil befestigt, insbesondere schraubverbunden ist,
wobei zwischen Drehmomentstützteil und Gehäuseteil ein Dichtungsteil, insbesondere ein zum erstgenannten Dichtungsteil gleichartiges Dichtungsteil, angeordnet ist. Von Vorteil ist dabei, dass im Lager nur eine Sorte Dichtungsteile bevorratet werden muss.

Bei einer vorteilhaften Ausgestaltung weist das Dichtungsteil ein Lochbild auf,
wobei bei Anordnung des Dichtungsteils zwischen Abdeckhaube und Gehäuseteil Schrauben durch erste Löcher, insbesondere des Lochbilds, des Dichtungsteils hindurchragen,
wobei bei Anordnung des Dichtungsteils zwischen Drehmomentstützteil und Gehäuseteil Schrauben durch zweite Löcher, insbesondere des Lochbilds, des Dichtungsteils hindurchragen,
- wobei die Anzahl der ersten Löcher und die Anzahl der zweiten Löcher unterschiedlich ist
- oder wobei die Menge der Winkelpositionen der ersten Löcher sich unterscheidet von der Menge der Winkelpositionen der zweiten Löcher. Von Vorteil ist dabei, dass

Bei einer vorteilhaften Ausgestaltung drückt der Kragenabschnitt das Dichtungsteil auf die Verschlusskappe, so dass diese vom Dichtungsteil und/oder vom Kragenabschnitt abdeckt ist. Von Vorteil ist dabei, dass das Dichtungsteil in verschiedener Verwendung einsetzbar ist am Getriebe, nämlich einerseits zum Abdichten zwischen Abdeckhaube und Gehäuseteil und andererseits zum Abdichten zwischen Drehmomentstützteil und Gehäuseteil.

Bei einer vorteilhaften Ausgestaltung gleicht das zwischen Drehmomentstützteil und Gehäuseteil angeordnete Dichtungsteil demjenigen Dichtungsteil, welches zwischen Abdeckhaube und Gehäuseteil angeordnet ist. Von Vorteil ist dabei, dass die Dichtungsteile gleichartig ausführbar sind und somit nur eine Sorte Dichtungsteil im Lager der Herstellungsanlage bevorratet werden muss.

Bei einer vorteilhaften Ausgestaltung ist das Dichtungsteil aus einem elastischen Stoff, wie Gummi oder Kunststoff, gefertigt
und/oder die Abdeckhaube ist aus Kunststoff oder Metall, insbesondere Stahl oder Aluminium, gefertigt und das Gehäuseteil aus Metall, insbesondere Stahl oder Aluminium, gefertigt ist. Von Vorteil ist dabei, dass die Abdeckhaube aus einem weniger elastischen Material als das Dichtungsteil fertigbar ist und somit ein einfaches Abdichten erreichbar ist.

Bei einer vorteilhaften Ausgestaltung weist das Drehmomentstützteil einen hebelartigen Fortsatz oder Abschnitt auf, der in Richtung des spitzen Teils des Ovals sich erstreckt. Von Vorteil ist dabei, dass das Drehmomentstützteil dieselbe radiale Außenkontur wie die Abdeckhaube zumindest abschnittsweise aufweist. In den anderen Abschnitten ragt das Drehmomentstützteil über das Dichtungsteil in radialer Richtung hinaus. Auf diese Weise ist der radiale Außenrand des Drehmomentstützteils und der Abdeckhaube gleichermaßen abdeckbar und abdichtbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Draufsicht auf ein erfindungsgemäßes Getriebe mit einer Abdeckhaube 1 gezeigt.

In der Figur 2 ist eine Draufsicht bei entfernter Abdeckhaube 1 gezeigt.

In der Figur 3 ist ein zugehöriger Querschnitt gezeigt.

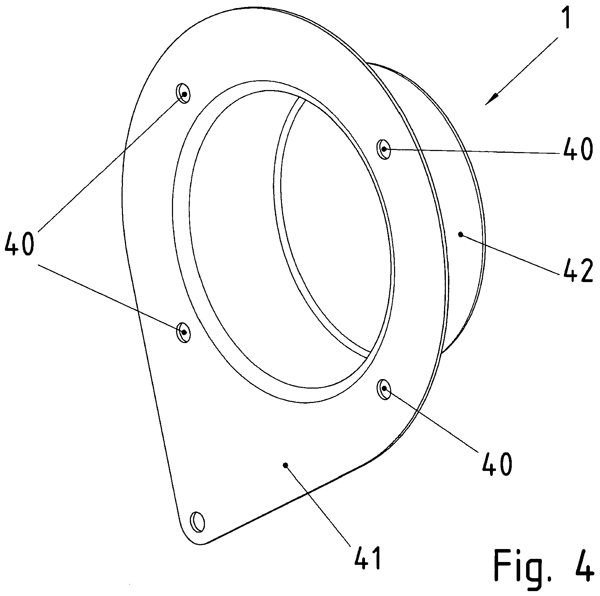

In der Figur 4 ist die Abdeckhaube 1 in Schrägansicht gezeigt.

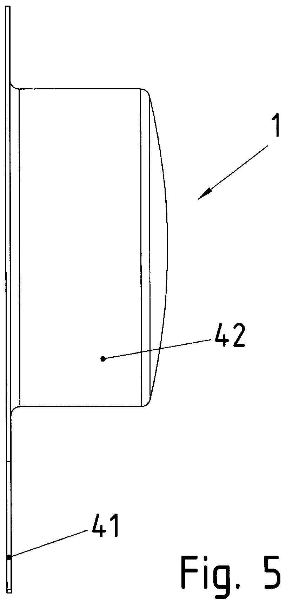

In der Figur 5 ist die Abdeckhaube 1 in Seitenansicht gezeigt.

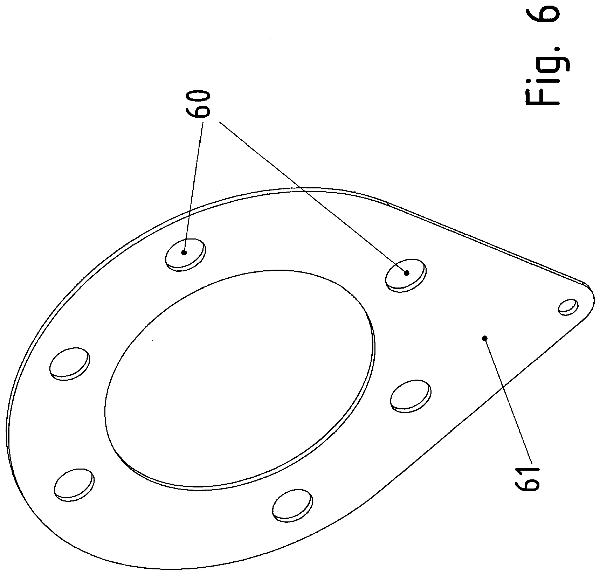

In der Figur 6 ist ein Dichtungsteil 61 in Schrägansicht gezeigt, welches zwischen Abdeckhaube 1 und Gehäuseteil 2 angeordnet ist.

In der Figur 7 ist das Getriebe aus einer gegenüber liegenden Seitenansicht gezeigt, so dass die Drehmomentstütze 70 sichtbar ist.

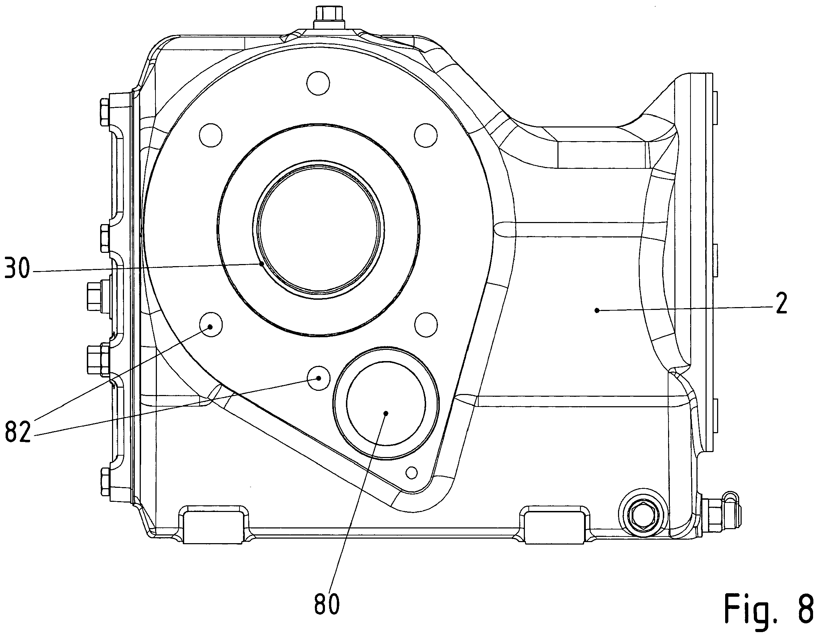

In der Figur 8 ist dieselbe Seitenansicht bei entfernter Drehmomentstütze 70 gezeigt.

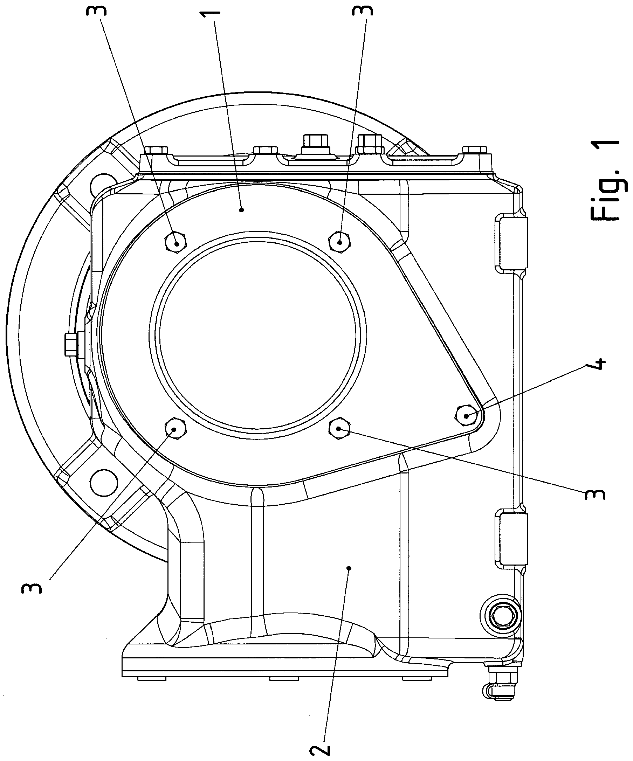

Wie in Figur 1 gezeigt, ist an dem Getriebe eine Abdeckhaube 1 angeordnet, welche den axialen Endbereich einer Hohlwelle 30 abdeckt.

An ihrem von der Abdeckhaube 1 abgewandten axialen Endbereich wird eine anzutreibenden Vollwelle in die Hohlwelle 30 eingesteckt und mit einer Schrumpfscheibe 21 verbunden.

Die Hohlwelle 30 ist vorzugsweise die abtreibende Welle des Getriebes.

Die Abdeckhaube 1 deckt somit auch die ansonsten herausragende Schrumpfscheibe 21 ab, welche die kraftschlüssige Verbindung zwischen Vollwelle und Hohlwelle 30 bewirkt.

Die Abdeckhaube 1 ist mittels einem zwischen dem Gehäuseteil 2 des Getriebes und der Abdeckhaube 1 zwischengeordneten Dichtungsteil 61 dicht verbunden.

Die Abdeckhaube ist mittels Schrauben 3 an das Gehäuseteil 2 angeschraubt. Dabei wird das Dichtungsteil zwischen der Abdeckhaube 1 und dem Gehäuseteil gequetscht, wodurch die Abdichtung bewirkt wird. Denn das Dichtungsteil 61 ist aus einem elastischen Material, insbesondere aus einem elastischeren Material als das Material der Abdeckhaube 1 und als das Material des Gehäuseteils. Vorzugsweise wird als Material des Dichtungsteils 61 ein Gummi oder ein elastischer Kunststoff verwendet.

Zur Abdichtung des im Getriebeinneren sich befindenden Schmieröls ist ein Wellendichtring 73 vorgesehen, welcher zwischen der Hohlwelle und dem Gehäuseteil angeordnet ist und somit ebenfalls von der Abdeckhaube 1 abgedeckt wird.

Die Abdeckhaube 1 weist eine nicht kreisrunde Form auf und deckt somit auch eine Verschlusskappe 22 zum Verschließen einer Öffnung im Gehäuseteil 2 ab. Diese Öffnung dient zum Einführen einer Zwischenwelle, die über ein Lager im Gehäuseteil gelagert ist. Somit deckt die Verschlusskappe, welche vorzugsweise aus einem Kunststoff oder Gummi gefertigt ist, den axialen Endbereich und/oder das Lager einer Zwischenwelle des Getriebes ab.

Die Schrauben 3 sind in Umfangsrichtung um die Achse der Hohlwelle 30 herum regelmäßig voneinander beabstandet.

Eine nicht zentrisch angeordnete Schraube 4 ist auf der von den Schrauben 3 abgewandten Seite der Verschlusskappe 22 angeordnet.

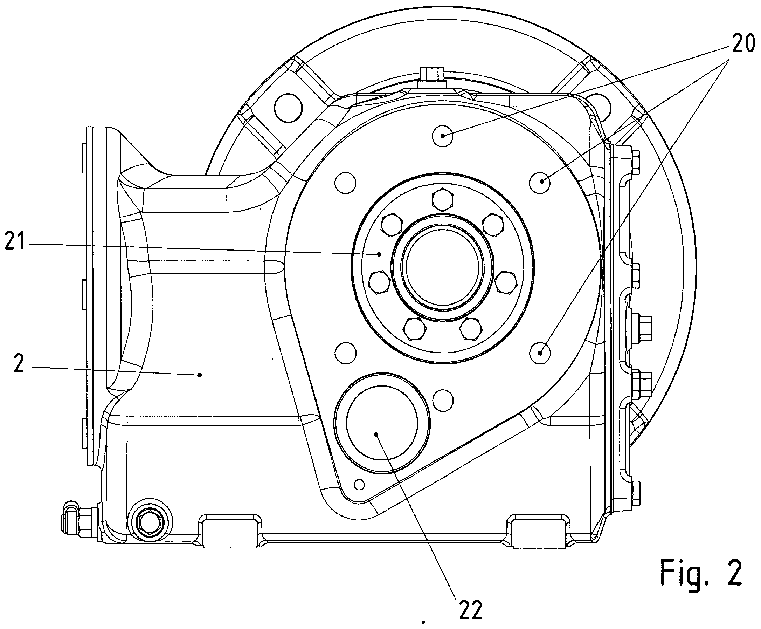

In Figur 2 ist die Seitenansicht des Getriebes bei entfernter Abdeckhaube 1 und entferntem Dichtungsteil 61 gezeigt. Dabei ist auch das Lochbild der Gewindebohrungen 20 zur Aufnahme von Schrauben 3 gezeigt, wobei mehr Gewindebohrungen 20 vorhanden sind als Schrauben 3.

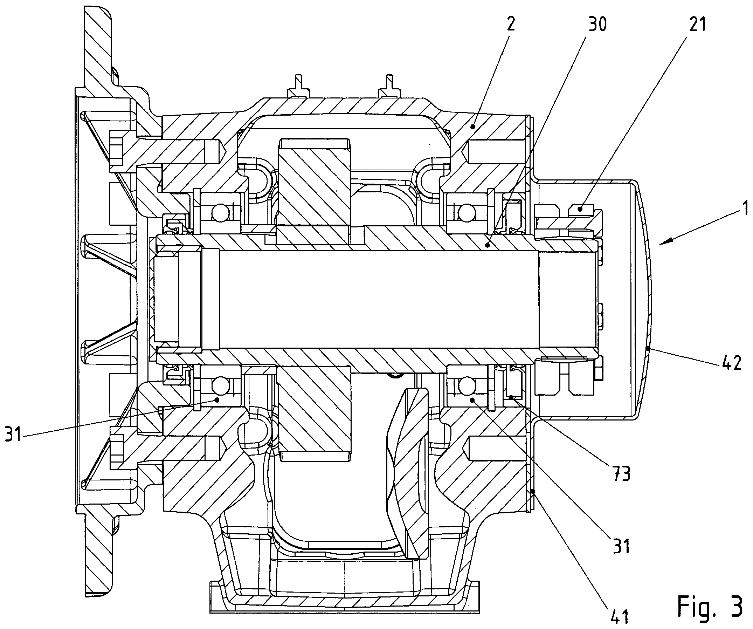

Wie in Figur 3 gezeigt, ist die Hohlwelle 30 über Lager 31 im Gehäuseteil 2 gelagert und mittels des Wellendichtrings 73 gegen das Gehäuseteil 2 abgedichtet.

Die Abdeckhaube 1 weist einen Haubenabschnitt 42 und einen Kragenabschnitt 41 auf. Dabei liegt der im Wesentlichen eben ausgebildete Kragenabschnitt 41 an dem ebenfalls eben ausgebildeten Dichtungsteil 61 an, welches zwischen dem Gehäuseteil 2 und der Abdeckhaube 1 zwischengeordnet ist.

Der Kragenabschnitt 41 weist durchgehende Löcher, also Durchgangsbohrungen 40, auf, durch welche die Schrauben (3, 4) hindurchragen, wobei das Dichtungsteil 61 entsprechend korrespondierende Löcher aufweist, so dass die Schrauben (3, 4) auch durch das Dichtungsteil hindurchragen. Der Schraubenkopf der Schrauben (3, 4) liegt an der Außenseite des Kragenabschnitts 41 an und drückt somit die Abdeckhaube 1 über das Dichtungsteil 61 an das Gehäuseteil 2 an, indem der Gewindeabschnitt der Schrauben (3, 4) in eine jeweilige Gewindebohrung 20 des Gehäuseteils 2 eingeschraubt ist.

Der Kragenabschnitt 41 ist an seinem äußeren Umfang nicht kreisrund ausgeführt sondern im Wesentlichen oval, wobei der spitzere Teil des Ovals die Verschlusskappe 22 abdeckt und der stumpfere Teil des Ovals den Wellendichtring 73 und die Schrumpfscheibe 21 sowie die Hohlwelle 30.

Statt eines Ovals ist auch eine andere von der Kreisring abweichende Form anwendbar, wenn sie ebenfalls die genannten Teile abdeckt.

Der Haubenabschnitt 42 selbst ist rotationssymmetrisch ausführbar, da der Haubenabschnitt 42 die Schrumpfscheibe 21 sowie die Hohlwelle 30 und den Wellendichtring 73 abdeckt, wobei jedoch Luft zur Beabstandung zwischengeordnet ist zwischen diesen Teilen und der Innenwandung des Haubenabschnitts 42. Das Dichtungsteil 61 weist hierbei eine kreisrunde Ausnehmung auf, so dass Luft direkt zwischengeordnet ist zwischen der Innenwandung des Haubenabschnitts 42 und den genannten Teilen, wie beispielsweise Schrumpfscheibe 21.

Der Kragenabschnitt 41 mit dem zugehörigen Abschnitt des Dichtungsteils 61, welches zwischen dem Kragenabschnitt 41 und Gehäuseteil 1 zwischengeordnet ist, deckt die Verschlusskappe 22 ab, wobei das Dichtungsteil 61 die Verschlusskappe 22 berührt, weil das Dichtungsteil 61 eben ausgeführt ist und der ebenfalls eben ausgeführte Kragenabschnitt 41 auf das Dichtungsteil angedrückt ist.

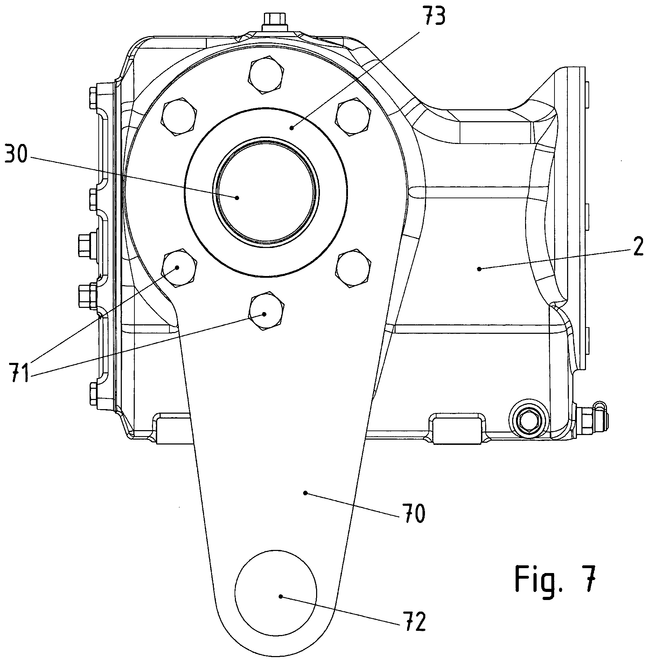

Wie in Figur 7 gezeigt, ist am von der Abdeckhaube 1 abgewandten axialen Endbereich der Hohlwelle 30 ein Drehmomentstützteil 70 angeordnet. Somit ist das Gehäuseteil 2 axial zwischen der Abdeckhaube 1 und dem Drehmomentstützteil 70 angeordnet.

Das Drehmomentstützteil 70 ist mittels Schrauben 71 an das Gehäuseteil 2 angeschraubt, wobei wiederum ein Dichtungsteil 61 zwischengeordnet ist, das identisch zu dem obengenannten Dichtungsteil 61 ausgeführt ist. Hierzu weist das Dichtungsteil 61 ein Lochbild auf, welches Löcher für die Schrauben 71 und auch die Schrauben (3, 4) vorgesehen ist.

Vorzugsweise sind die Löcher in Umfangsrichtung regelmäßig voneinander beabstandet und auf demselben Radialabstand zur Achse der Hohlwelle 30 angeordnet. Nur die Schraube 4 sitzt auf einem unterschiedlichen Radialabstand und einer nicht in die Regelmäßigkeit einordenbaren Umfangswinkelposition.

Wie in den Figuren 7 und 1 gezeigt, ist somit das Drehmomentstützteil 70 mittels sechs Schrauben 71 anschraubbar und die Abdeckhaube 1 mittels vier Schrauben 3 sowie einer Schraube 4.

Das Drehmomentstützteil 70 ist hebelartig ausgeführt und weist ein Loch 72 auf, mit welchem das Drehmomentstützteil an ein festes Teil der Anlage, wie Stutzen, Träger, Maschinengestänge oder an eine Wand, festlegbar ist, insbesondere anschraubbar.

Das Dichtungsteil 61 liegt dabei vollständig am Gehäuseteil 2 und am Drehmomentstützteil 70 an. Der Hebelabschnitt des Drehmomentstützteils 70 erstreckt sich also in Richtung des spitzeren Teils der ovalen Außenform, der wiederum eine Verschlusskappe 80 abdeckt.

Die Schrauben 71 sind in Gewindebohrungen 82 des Gehäuseteils eingeschraubt und die Verschlusskappe 80, welche die Öffnung im Getriebegehäuseteil 2 für das andere Wellenende der Zwischenwelle sowie deren Lager abdeckt. Dabei liegt das Dichtungsteil 61 ebenfalls berührend an der Verschlusskappe 80 an.

Mittels des eben ausgebildeten Drehmomentstützteils 70 und des zwischen Gehäuseteil 2 und Drehmomentstützteil 70 angeordneten Dichtungsteils 61 ist auch die Hohlwelle 30 samt Lager und optional auch ein zugehöriger Wellendichtring 73 dicht abgedeckt.

### Bezugszeichenliste

1 Verschlusskappe
2 Gehäuseteil
3 Schraube
4 Schraube
20 Gewindebohrungen
21 Schrumpfscheibe
22 Verschlusskappe zum Verschließen einer Öffnung im Gehäuseteil 2
30 Hohlwelle
31 Lager
40 Durchgangsbohrung
41 Kragenabschnitt
42 Haubenabschnitt
60 Durchgangsloch
61 Dichtungsteil
70 Drehmomentstützteil
71 Schrauben
72 Loch
73 Wellendichtring
80 Verschlusskappe zum Verschließen einer Öffnung im Gehäuseteil 2
82 Gewindebohrungen

## Patentansprüche

1. Getriebe mit einer ersten Welle, und einer zweiten Welle,
wobei das Getriebe ein Gehäuseteil (2) aufweist, welches zwei Ausnehmungen aufweist, wobei ein axialer Endbereich durch die erste der Ausnehmungen herausragt,
wobei die zweite Ausnehmung mittels einer Verschlusskappe (22) verschlossen ist
wobei eine Abdeckhaube (1) am Gehäuseteil (2) befestigt ist,
wobei zwischen Gehäuseteil (2) und Abdeckhaube ein Dichtungsteil (61) angeordnet ist, welches eine Ausnehmung, im Bereich der ersten Ausnehmung aufweist, so dass der axiale Endbereich zumindest teilweise durch diese Ausnehmung hindurchragt,
**dadurch gekennzeichnet, dass** das Dichtungsteil (61) die zweite Ausnehmung abdeckt,
und dass die Abdeckhaube einen Haubenabschnitt (42) und einen mit diesem verbundenen Kragenabschnitt (41) aufweist,
und dass der Kragenabschnitt (41) einen im Wesentlichen ovalen Außenumfang aufweist.

2. Getriebe nach Anspruch 1,
**dadurch gekennzeichnet, dass**
die erste Welle eine Hohlwelle (30) ist und die zweite Welle eine Vollwelle ist.

3. Getriebe nach mindestens einem der vorangegangenen Ansprüche,
**dadurch gekennzeichnet, dass**
die Verschlusskappe (1) ein Lager der zweiten Welle oder einen an der zweiten Welle angeordneten Wellendichtring abdeckt.

4. Getriebe nach mindestens einem der vorangegangenen Ansprüche,
**dadurch gekennzeichnet, dass**
die Verschlusskappe (1) mit einem die zweite Ausnehmung umgebenden Randbereich der Außenoberfläche des Gehäuseteils (2) einen im Wesentlichen ebenen Flächenabschnitt bildet.

5. Getriebe nach mindestens einem der vorangegangenen Ansprüche,
**dadurch gekennzeichnet, dass**
der Haubenabschnitt (42) rotationssymmetrisch ausgeführt ist.

6. Getriebe nach mindestens einem der vorangegangenen Ansprüche,
**dadurch gekennzeichnet, dass**

7. Getriebe nach mindestens einem der vorangegangenen Ansprüche,
**dadurch gekennzeichnet, dass**
ein Drehmomentstützteil (70) am Gehäuseteil (2) befestigt ist,
wobei zwischen Drehmomentstützteil (70) und Gehäuseteil (2) ein Dichtungsteil (61), angeordnet ist.

8. Getriebe nach mindestens einem der vorangegangenen Ansprüche,
**dadurch gekennzeichnet, dass**
das Dichtungsteil (61) ein Lochbild aufweist,
wobei bei Anordnung des Dichtungsteils (61) zwischen Abdeckhaube und Gehäuseteil (2) Schrauben durch erste Löcher **des Lochbilds** des Dichtungsteils (61) hindurchragen,
wobei bei Anordnung des Dichtungsteils (61) zwischen Drehmomentstützteil (70) und Gehäuseteil (2) Schrauben durch zweite Löcher **des Lochbilds** des Dichtungsteils (61) hindurchragen,
- wobei die Anzahl der ersten Löcher (72) und die Anzahl der zweiten Löcher (72) unterschiedlich ist
- oder wobei die Menge der Winkelpositionen der ersten Löcher (72) sich unterscheidet von der Menge der Winkelpositionen der zweiten Löcher (72).

9. Getriebe nach mindestens einem der vorangegangenen Ansprüche,
**dadurch gekennzeichnet, dass**
der Kragenabschnitt (41) das Dichtungsteil (61) auf die Verschlusskappe (1) drückt, so dass diese vom Dichtungsteil (61) oder vom Kragenabschnitt (41) abdeckt ist.

10. Getriebe nach mindestens einem der vorangegangenen Ansprüche,
**dadurch gekennzeichnet, dass**
das zwischen Drehmomentstützteil (70) und Gehäuseteil (2) angeordnete Dichtungsteil (61) demjenigen Dichtungsteil (61) gleicht oder identisch gleicht, welches zwischen Abdeckhaube und Gehäuseteil (2) angeordnet ist.

11. Getriebe nach mindestens einem der vorangegangenen Ansprüche,
**dadurch gekennzeichnet, dass**
das Dichtungsteil (61) aus einem elastischen Stoff, wie Gummi oder Kunststoff, gefertigt ist

12. Getriebe nach mindestens einem der vorangegangenen Ansprüche,
**dadurch gekennzeichnet, dass**
die Abdeckhaube aus Kunststoff oder Metall, gefertigt ist und das Gehäuseteil (2) aus Metall, gefertigt ist.

13. Getriebe nach mindestens einem der vorangegangenen Ansprüche,
**dadurch gekennzeichnet, dass**
das Drehmomentstützteil (70) einen hebelartigen Fortsatz oder Abschnitt aufweist, der in Richtung des spitzen Teils des Ovals sich erstreckt.

## Claims

1. A transmission with a first shaft, and a second shaft,
wherein the transmission has a housing part (2) which has two cutouts,
wherein an axial end region projects out through the first of the cutouts,
wherein the second cutout is closed by means of a closing cap (22) wherein a covering hood (1) is fastened to the housing part (2),
wherein a sealing part (61) is arranged between the housing part (2) and covering hood, which sealing part has a cutout in the region of the first cutout, so that the axial end region projects at least partially through this cutout,
**characterised in that**
the sealing part (61) covers the second cutout,
and **in that**
the covering hood has a hood portion (42) and a collar portion (41) connected thereto, and **in that**
the collar portion (41) has a substantially oval outer periphery.

2. A transmission according to Claim 1,
**characterised in that**
the first shaft is a hollow shaft (30) and the second shaft is a solid shaft.

3. A transmission according to at least one of the preceding claims,
**characterised in that**
the closing cap (1) covers a bearing of the second shaft or a shaft sealing ring arranged on the second shaft.

4. A transmission according to at least one of the preceding claims,
**characterised in that**
the closing cap (1) forms a substantially flat surface section with an edge region of the outer surface of the housing part (2) which surrounds the second cutout.

5. A transmission according to at least one of the preceding claims,
**characterised in that**
the hood portion (42) is designed to be rotationally symmetrical.

6. A transmission according to at least one of the preceding claims, **characterised in that**

7. A transmission according to at least one of the preceding claims,
**characterised in that**
a torque support part (70) is fastened to the housing part (2),
with a sealing part (61) being arranged between the torque support part (70) and housing part (2).

8. A transmission according to at least one of the preceding claims,
**characterised in that**
the sealing part (61) has a pattern of holes,
with screws protruding through first holes in the pattern of holes of the sealing part (61) when the sealing part (61) is arranged between the covering hood and housing part (2),
with screws protruding through second holes in the pattern of holes of the sealing part (61) when the sealing part (61) is arranged between the torque support part (70) and housing part (2),
- the number of the first holes (72) and the number of the second holes (72) being different
- or the amount of the angular positions of the first holes (72) differing from the amount of the angular positions of the second holes (72).

9. A transmission according to at least one of the preceding claims,
**characterised in that**
the collar portion (41) presses the sealing part (61) onto the closing cap (1), so that the latter is covered by the sealing part (61) or by the collar portion (41).

10. A transmission according to at least one of the preceding claims,
**characterised in that**
the sealing part (61) arranged between the torque support part (70) and housing part (2) is equal to or identically equal to that sealing part (61) which is arranged between the covering hood and housing part (2).

11. A transmission according to at least one of the preceding claims,
**characterised in that**
the sealing part (61) is manufactured from an elastic substance, such as rubber or plastics material.

12. A transmission according to at least one of the preceding claims,
**characterised in that**
the covering hood is manufactured from plastics material or metal and the housing part (2) is manufactured from metal.

13. A transmission according to at least one of the preceding claims,
**characterised in that**
the torque support part (70) has a lever-like continuation or portion which extends in the direction of the pointed part of the oval.

## Revendications

1. Transmission pourvue d'un premier arbre et d'un second arbre,
ladite transmission étant munie d'une partie (2) formant carter et percée de deux évidements,
une région extrême axiale faisant saillie à travers le premier desdits évidements,
le second évidement étant occulté au moyen d'un capuchon obturateur (22),
un capot (1) étant fixé à la partie (2) formant carter,
sachant qu'une pièce d'étanchement (61), interposée entre ladite partie (2) formant carter et ledit capot, est dotée d'une découpe dans la zone du premier évidement, de telle sorte que la région extrême axiale fasse saillie au moins partiellement à travers cette découpe, **caractérisée par le fait que**
la pièce d'étanchement (61) recouvre le second évidement,
que le capot comprend un tronçon (42) formant coiffe, et un tronçon (41) formant collerette et relié à ce dernier,
et que ledit tronçon (41) formant collerette présente un pourtour extérieur substantiellement ovale.

2. Transmission selon la revendication 1,
**caractérisée par le fait que**
le premier arbre est un arbre creux (30) et le second arbre est un arbre massif.

3. Transmission selon au moins l'une des revendications précédentes,
**caractérisée par le fait que**
le capuchon obturateur (1) recouvre un palier du second arbre, ou une bague d'étanchement mise en place sur ledit second arbre.

4. Transmission selon au moins l'une des revendications précédentes,
**caractérisée par le fait que**
le capuchon obturateur (1) forme une zone de surface substantiellement plane en association avec une région marginale de la surface extérieure de la partie (2) formant carter, qui entoure le second évidement.

5. Transmission selon au moins l'une des revendications précédentes,
**caractérisée par le fait que**
le tronçon (42) formant coiffe offre une réalisation à symétrie de révolution.

6. Transmission selon au moins l'une des revendications précédentes,
**caractérisée par le fait que**
le tronçon formant collerette présente un pourtour extérieur substantiellement ovale.

7. Transmission selon au moins l'une des revendications précédentes,
**caractérisée par le fait**
**qu'**une partie (70) de support de couples est fixée à la partie (2) formant carter,
une pièce d'étanchement (61) étant interposée entre ladite partie (70) de support de couples et ladite partie (2) formant carter.

8. Transmission selon au moins l'une des revendications précédentes,
**caractérisée par le fait que**
la pièce d'étanchement (61) présente une constellation perforée,
sachant que des vis traversent des premiers trous de la constellation perforée de la pièce d'étanchement (61) lorsque ladite pièce d'étanchement (61) est interposée entre le capot et la partie (2) formant carter,
des vis traversant des seconds trous de ladite constellation perforée de ladite pièce d'étanchement (61) lorsque ladite pièce d'étanchement (61) est interposée entre la partie (70) de support de couples et ladite partie (2) formant carter,
- le nombre des premiers trous (72) et le nombre des seconds trous (72) étant différents
- ou la gamme des emplacements angulaires desdits premiers trous (72) étant différente de la gamme des emplacements angulaires desdits seconds trous (72).

9. Transmission selon au moins l'une des revendications précédentes,
**caractérisée par le fait que**
le tronçon (41) formant collerette de la pièce d'étanchement (61) exerce une pression sur le capuchon obturateur (1), de telle sorte que ce dernier soit recouvert par ladite pièce d'étanchement (61) ou par ledit tronçon (41) formant collerette.

10. Transmission selon au moins l'une des revendications précédentes,
**caractérisée par le fait que**
la pièce d'étanchement (61), interposée entre la partie (70) de support de couples et la partie (2) formant carter, est semblable ou identique à la pièce d'étanchement (61) interposée entre le capot et ladite partie (2) formant carter.

11. Transmission selon au moins l'une des revendications précédentes,
**caractérisée par le fait que**
la pièce d'étanchement (61) est fabriquée en un matériau élastique, tel que du caoutchouc ou une matière plastique.

12. Transmission selon au moins l'une des revendications précédentes,
**caractérisée par le fait que**
le capot est fabriqué en matière plastique ou en métal, et la partie (2) formant carter est fabriquée en métal.

13. Transmission selon au moins l'une des revendications précédentes,
**caractérisée par le fait que**
la partie (70) de support de couples est dotée d'un appendice ou d'un tronçon du type levier, s'étendant en direction de la partie pointue de l'ovale.
